# FASCICULE DE BREVET EUROPEEN

(11) **EP 2 328 763 B1**
(45) Date de publication et mention de la délivrance du brevet: **29.08.2012**
(21) Numéro de dépôt: 09747892.9
(22) Date de dépôt: 21.09.2009
(51) Int. Cl.: B60C 23/04

(54) **ORGANE DE SUPPORT A COURBURE CONTINUE**
HALTERUNGSGLIED MIT EINER DURCHGEHENDEN KRÜMMUNG
MOUNTING MEMBER HAVING A CONTINUOUS CURVATURE

(30) Priorité: 24.09.2008 FR 0856422
(43) Date de publication de la demande: 08.06.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: EL-BERRICHI, Reda, F-63100 Clermont-ferrand (FR)
(74) Mandataire: Dequire, Philippe Jean-Marie Denis
(86) Numéro de dépôt international: PCT/FR2009/051774
(87) Numéro de publication internationale: WO 2010/034926

(56) Documents cités:
- WO-A-01/38111
- WO-A-02/07993

## Description

L'invention concerne le domaine technique des pneumatiques pour véhicule automobile.

On connaît et WO02/07993 dans l'état de la technique, notamment d'après les documents EP 1 544 001 A9, un organe en gomme collé à la surface intérieure d'un pneumatique et formant support pour un dispositif électronique tel qu'un capteur de pression ou de température. L'organe en gomme est parfois désigné sous le terme anglais "patch".

Le rôle de cet organe est notamment d'assurer un découplage mécanique entre le dispositif électronique, généralement de grande rigidité, et la surface du pneumatique, généralement souple du fait qu'elle est réalisée en gomme. Il serait en effet impossible de fixer solidement le dispositif électronique directement à la surface du pneumatique car cela produirait des zones de concentration d'efforts du fait des grandes différences de rigidité entre le dispositif et le pneumatique. En effet, les zones de concentration d'efforts risquent de détériorer prématurément la surface du pneumatique ou de l'organe et ainsi de rompre prématurément la fixation du dispositif au pneumatique.

Malgré l'utilisation d'un tel organe en gomme et du fait que le pneumatique subit des accélérations et des déformations qui fragilisent la fixation de l'organe au pneumatique, on constate généralement l'apparition de fissures à la surface de l'organe qui peuvent se propager jusqu'à remettre en cause la fixation du dispositif électronique.

L'invention a notamment pour but de proposer un organe formant support dont la résistance mécanique est améliorée tout au long de la vie du pneumatique.

A cet effet, l'invention a pour objet un organe formant support pour un dispositif, comportant :
- une surface inférieure, sensiblement plane, de liaison avec un pneumatique, délimitée par un contour,
- une surface supérieure de support du dispositif, délimitée par un contour,
- une surface périphérique formant jupe de liaison du contour de la surface inférieure au contour de la surface supérieure,
dans lequel l'un au moins des paramètres de l'ensemble constitué par :
- la courbure du contour de la surface supérieure, et
- la courbure du profil de la surface périphérique, en section selon tout plan normal à la surface inférieure et orthogonal à la tangente au contour de la surface inférieure au point d'intersection du plan avec le contour,
est variable et à variation continue le long respectivement du contour et du profil.

On rappelle que la courbure d'un contour en un point du contour est définie comme l'inverse du rayon du cercle osculateur au contour en ce point, c'est-à-dire du cercle venant épouser le contour au plus près au voisinage du point. On parle parfois également du rayon de courbure du contour en un point pour désigner le rayon du cercle osculateur en ce point.

Généralement, les dispositifs électroniques destinés à être intégrés dans un pneumatique sont de forme parallélépipédique. Cela est dû notamment au fait que ces dispositifs électroniques comprennent souvent des circuits imprimés réalisés sur des plaquettes carrées ou rectangulaires. L'organe formant support du dispositif est conformé pour que sa surface plane supérieure présente sensiblement la même forme que le dispositif, c'est-à-dire une forme générale rectangulaire. Les angles de la surface supérieure sont éventuellement arrondis. Un tel exemple de réalisation est représenté sur la figure 8 du document EP 1 544 001 A9 qui montre un organe dont le contour de la surface supérieure comprend un ensemble de droites réunies par des courbes.

Les zones du contour de la surface supérieure de l'organe situées à l'interface entre les portions droites et les portions courbes forment des zones de concentration d'efforts qui sont l'une des causes de la rupture prématurée de l'organe fixé à la surface du pneumatique. En outre, plus le rayon de courbure est faible, plus les efforts transmis par le pneumatique sont localisés et ainsi sont pénalisants.

L'invention propose donc de réduire autant que possible ces zones de concentration d'efforts en supprimant les ruptures de rayons de courbure du contour de la surface supérieure. Pour cela, le contour de la surface supérieure de l'organe selon l'invention présente une courbure variable et à variation continue le long du contour. En d'autres termes, le rayon de courbure, le long du contour de la surface supérieure, évolue depuis un rayon infini au niveau des portions droites du contour, s'il y en a, à un rayon fini de l'ordre de quelques millimètres au niveau des portions courbes. L'évolution de ce rayon de courbure est continue et ne présente pas de variations brusques.

Grâce à l'invention, les contraintes sont régulièrement réparties autour du contour de la surface supérieure et leur intensité est par conséquent moindre. En effet, en proposant une évolution continue du rayon de courbure du contour de la surface supérieure, il est possible de maximiser le rayon de courbure minimum atteint par le contour au niveau de ses portions courbes.

Une autre caractéristique identifiée par les inventeurs pour optimiser la tenue de l'organe sur la surface du pneumatique consiste à conformer l'organe de sorte que la surface périphérique présente, en section selon tout plan normal à la surface supérieure et orthogonal à la tangente au contour de la surface supérieure au point d'intersection du plan avec le contour, un profil reliant la surface supérieure à la surface inférieure dont la courbure est variable et à variation continue. Cela signifie que l'évolution du contour de l'organe, dans un plan vertical, est également continue ce qui permet de limiter les zones anguleuses.

Les deux caractéristiques définies ci-dessus sont issues d'un même concept inventif : donner à l'organe une forme dont les courbures évoluent continûment, en limitant ainsi les zones anguleuses qui peuvent être à l'origine d'une concentration d'efforts qui limite la durée de vie de l'organe fixé à la surface du pneumatique.

Bien entendu, ces deux caractéristiques peuvent être mises en oeuvre sur un organe seules ou en combinaison l'une avec l'autre.

Un organe selon l'invention peut en outre comprendre l'une ou plusieurs des caractéristiques suivantes.
- La surface supérieure est sensiblement plane.
- La surface supérieure est de forme générale allongée.
- Le contour de la surface supérieure comprend au moins deux portions opposées rectilignes et sensiblement parallèles.
- Le contour de la surface supérieure comprend au moins deux portions courbes opposées reliant les portions rectilignes.
- Le rayon de courbure du contour varie entre un rayon minimum et un rayon maximum, tous les deux finis.
- Le contour de la surface supérieure est défini par une spline, de préférence de degré 3 ou 5. On rappelle qu'une spline est une fonction définie par morceaux par des polynômes. Cette définition du contour de la surface supérieure est particulièrement intéressante puisque la spline étant une courbe polynomiale, la variation de son rayon de courbure est continue. En outre, une spline est une courbe polynomiale dont la définition est relativement simple ce qui permet de la définir de manière à ce que son rayon de courbure minimum soit maximisé.
- Le profil en section de la surface périphérique est une spline, de préférence de degré 3 ou 5.
- Le profil en section de la surface périphérique rejoint la surface inférieure selon un angle compris entre 9 et 15°, de préférence entre 10° et 12°. L'angle des bordures de l'organe est un paramètre important à prendre en considération pour que la fixation de l'organe du pneumatique soit durable. En effet, si cet angle est inférieur à 9°, une ondulation des bordures apparaît, provoquant au moment de la pose un risque de replis de la bordure périphérique de l'organe qu'il est difficile d'aplatir correctement. Si cet angle est supérieur à 15°, le bord périphérique de l'organe est trop rigide et est susceptible de créer des contraintes trop fortes à la surface du pneumatique et de provoquer ainsi des cassures ou des décollements au cours du roulage.
- Le profil en section de la surface périphérique rejoint la surface supérieure selon un angle donné en fonction du besoin, cet angle peut être compris entre 0° et 25°, lorsque l'on veut qu'il y ait une certaine transmission d'efforts entre le pneumatique et l'électronique, il peut être négatif, par exemple entre -25° et 0° lorsque on souhaite au contraire découpler l'électronique des efforts transmis par le pneumatique.
- Les surfaces supérieure et inférieure sont parallèles.
- L'organe est réalisé en gomme, de préférence d'un seul tenant.

L'invention a également pour objet un pneumatique comprenant un organe tel que précédemment défini.

L'invention sera mieux comprise à la lecture de la description qui va suivre, faite uniquement à titre d'exemple en se référant aux dessins annexés dans lesquels :
- la figure 1 est une vue en perspective d'un organe de l'état de la technique,
- la figure 2 est un schéma du contour de la surface supérieure de l'organe de la figure 1,
- la figure 3 est une vue en perspective d'un organe selon l'invention,
- la figure 4 est un schéma superposant les contours des surfaces supérieures de l'organe de la figure 1 et de l'organe de la figure 3,
- la figure 5 est un schéma en section droite de la surface périphérique de l'organe de la figure 3.

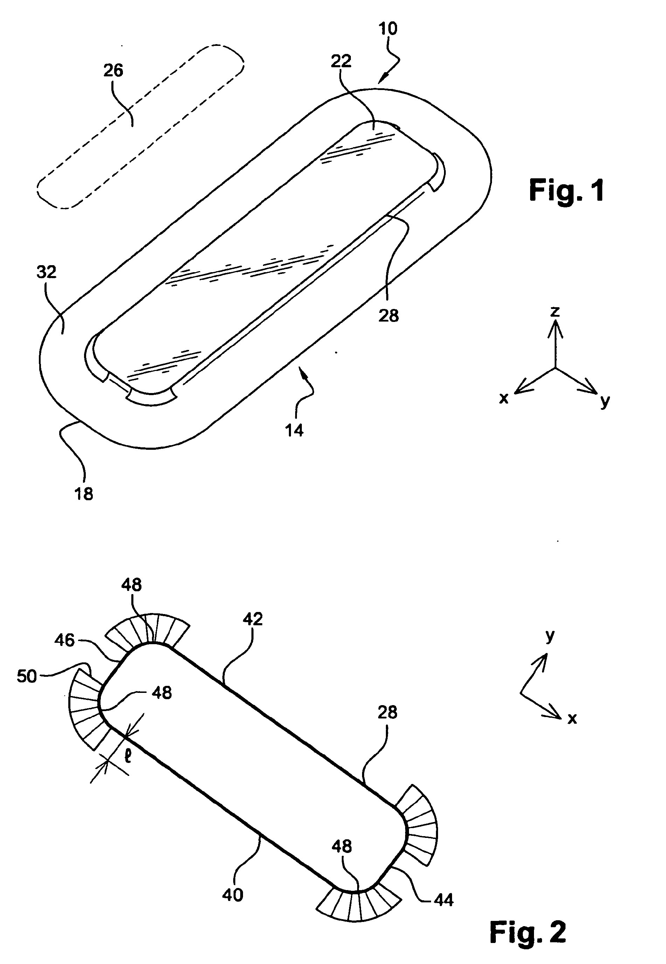

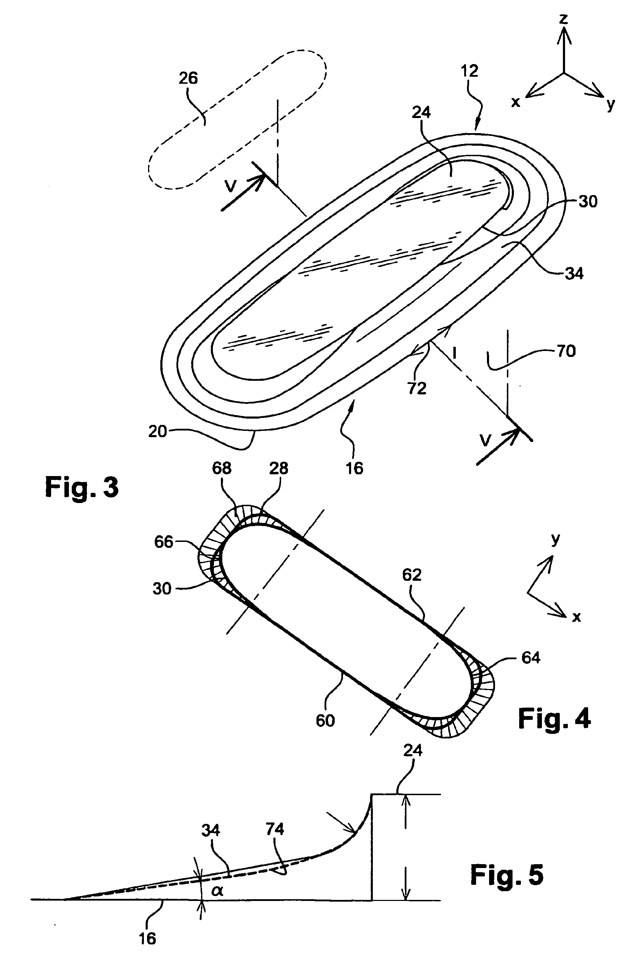

On a représenté sur les figures 1 et 3 deux organes respectivement désignés par les références 10 et 12 formant supports pour un dispositif. L'organe 10 représenté sur la figure 1 est un organe selon l'état de la technique tandis que l'organe 12 représenté sur la figure 3 est un organe selon l'invention.

Dans la suite de la description, les organes 10 et 12 seront repérés par rapport à un repère orthonormé xyz dont la direction x s'étend suivant la direction principale de l'organe 10 ou 12 et dont la direction z est orientée selon une direction verticale.

Chaque organe 10 et 12 comporte respectivement :
- une surface plane inférieure 14 et 16 de liaison avec un pneumatique (non représenté), délimitée par un contour 18 et 20,
- une surface supérieure 22 et 24 de support d'un dispositif 26 schématisé sur les figures 1 et 3 par une courbe en trait pointillé, la surface supérieure 22 et 24 étant délimitée par un contour 28 et 30, et étant plane dans l'exemple représenté,
- une surface périphérique 32 et 34 formant une jupe de liaison du contour 18 et 20 de la surface inférieure 14 et 16 au contour 28 et 30 de la surface supérieure 22 et 24.

Sur les deux organes 10 et 12, les surfaces inférieures 14 et 16 sont respectivement parallèles aux surfaces supérieures 22 et 24, ces surfaces étant sensiblement parallèles au plan xy.

La forme générale des surfaces 22 et 24 est convexe et allongée selon la direction x, la surface supérieure 22 de l'organe 10 de l'état de la technique étant sensiblement rectangulaire tandis que la surface supérieure 24 de l'organe 12 de l'invention est sensiblement ovale ou ellipsoïdale.

La forme des surfaces supérieures 22 et 24 est adaptée pour supporter les organes 26. L'organe 26 est représenté sur les figures 1 et 3 par une courbe ovale pointillée. Cette représentation n'est en aucun cas limitative. En effet, l'organe 26 peut être de toutes formes et de toutes dimensions. Généralement, cet organe 26 est une puce électronique réalisée sur un circuit imprimé de forme carrée ou rectangulaire. Le dispositif électronique 26 peut être par exemple un capteur de température ou de pression ou un dispositif destiné à recueillir des informations concernant la fabrication du pneumatique ou son identité.

Comme représenté sur la figure 2, le contour 28 de l'organe 10 de l'état de la technique est de forme sensiblement rectangulaire et comprend deux grands côtés 40 et 42 sensiblement linéaires rectilignes et parallèles à la direction x et deux petits côtés 44 et 46 sensiblement linéaires rectilignes et orthogonaux aux côtés 40 et 42 et par conséquent sensiblement parallèles à la direction y. Le contour 42 comprend par conséquent une succession de grands côtés et de petits côtés. La transition entre un grand côté et un petit côté est réalisée au moyen de lignes courbes 48 constituées par des segments de cercle, dans le cas présent par des quarts de cercle.

La courbure en un point donné du contour 42 est symbolisée sur la figure 2 par un segment 50 dont la longueur est fonction de la courbure du point dessiné. Comme on peut le constater, au niveau des côtés rectilignes 40, 42, 44 et 46, aucun segment 50 n'est représenté car, le rayon de courbure étant infini, la courbure est nulle. En revanche, au niveau des portions courbes de liaison des segments rectilignes, on constate que les segments 50 symbolisant la courbure du contour 28 présentent une longueur t donnée qui est la même tout du long de la portion courbe 48 du contour 28. Cette courbure est constante tout du long de la portion courbe 48 car cette portion courbe est en arc de cercle.

On constate que la courbure du contour 28 varie brutalement de 0 à ℓ au niveau de la jonction entre les portions courbes 48 et les portions rectilignes. Ainsi, la courbure du contour 28 est variable mais sa variation n'est pas continue.

La figure 4 représente la superposition du contour 28 de l'organe 10, dont la forme vient d'être décrite en référence à la figure 2, avec le contour 30 de la surface supérieure 24 de l'organe 12 selon l'invention.

Le contour 30 peut être analysé de la même manière que le contour 28. Le contour 30 est de forme générale allongée selon la direction x. Il comprend deux portions de droite 60 et 62 rectilignes et sensiblement parallèles par rapport à la direction x. Les portions de droite 60 et 62 sont reliées l'une à l'autre au moyen de portions courbes 64 et 66.

De la même manière que sur la figure 2, on a représenté sur la figure 4 un ensemble de segments 68 disposés orthogonalement au contour 30 pour quantifier la courbure de ce contour en tout points.

On constate qu'au niveau des portions droites 60 et 62, la courbure du contour est nulle. En revanche, au niveau des portions courbes 64 et 66, la courbure du contour 30 varie et est non nulle. Comme on peut le constater, la variation de la courbure du contour 30 est continue et ne comprend pas de rupture brusque. On note par ailleurs que la courbure maximale atteinte par les portions courbes 64 et 66 est inférieure à la courbure du contour 28 de l'organe 10 de l'état de la technique au niveau de ses portions courbes 48.

En d'autres termes, le contour 30 de la surface supérieure 24 de l'organe 12 selon l'invention présente une courbure variable et à variation continue tout le long du contour 30.

On notera que, pour une même longueur et une même largeur des surfaces supérieures 22 et 24 des organes respectifs 10 et 12, le rayon de courbure minimum de la surface 24 de l'organe de l'invention est par exemple de 6,2 mm, tandis que le rayon de courbure minimum de la surface 22 de l'organe de l'état de la technique est de 4,9 mm. Par conséquent, l'invention permet de maximiser le rayon de courbure minimum de la surface supérieure de l'organe.

La forme du contour 30 de l'organe 12 de l'invention est obtenue de manière mathématique au moyen d'une courbe de type spline. On rappelle qu'une spline est une courbe polynomiale définie par morceaux. De préférence, la spline utilisée est de degré 3 ou 5.

Selon un autre aspect de l'invention, on s'intéresse à la forme en coupe de la surface périphérique 34 de l'organe 12 de l'invention. Pour cela, on définit un plan 70 parallèle au plan yz, c'est-à-dire normal à la surface inférieure 16 de l'organe et orthogonal, en un point 1 d'intersection du plan avec le contour 20 de la surface inférieure 16, à la tangente 72 au contour 20 au point I.

La figure 5 représente une coupe de la surface périphérique 34 selon le plan 70, d'une part de l'organe 10 de la figure 1 en trait continu, et d'autre part de l'organe 12 de la figure 3 en trait discontinu.

On constate sur cette figure 5 que la surface périphérique 34 de l'organe 12 selon l'invention présente dans ce plan un profil 74 reliant la surface supérieure 24 à la surface inférieure 16 et que ce profil 74 présente une courbure variable dont la variation est continue. Le profil 74 ne présente pas de brusque rupture de pente contrairement au profil de la surface périphérique de l'organe 10 de l'état de la technique qui comprend une portion droite reliée de manière brutale à une portion courbe.

Selon l'invention, la surface périphérique 34 de l'organe est telle que, quel que soit le plan de coupe 70 utilisé et vérifiant les caractéristiques mentionnées ci-dessus, le profil 74 de la surface périphérique 34 présente une courbure variable dont la variation est continue.

En outre, le profil 74 de la surface 34 rejoint la surface inférieure selon un angle α compris entre 9 et 15°.

Des tests ont montré qu'en concevant un organe dont les courbures sont continues, on augmente considérablement la durée de vie de la fixation de l'organe sur la surface du pneumatique.

Enfin, on notera que les exemples de réalisation représentés sur les figures ne le sont qu'à titre illustratif. En effet, l'organe de l'invention peut comprendre une surface supérieure de forme asymétrique comprenant par exemple une extrémité plus large que l'autre, la courbure de la surface supérieure peut être localement négative ou positive, les surfaces supérieure et inférieure peuvent être parallèles ou non .

## Revendications

1. Organe (12) formant support pour un dispositif (26),
comportant:
une surface inférieure (16), sensiblement plane, de liaison avec un pneumatique, délimitée par un contour (20),
- une surface supérieure (24) de support du dispositif (26), délimitée par un contour (30),
- une surface périphérique (34) formant jupe de liaison du contour (20) de la surface inférieure (16) au contour (30) de la surface supérieure (24), **caractérisé en ce que** l'un au moins des paramètres de l'ensemble constitué par :
- la courbure du contour (30) de la surface supérieure (24), et
- la courbure du profil (74) de la surface périphérique (34), en section selon tout plan (70) normal à la surface inférieure (16) et orthogonal à la tangente (72) au contour (20) de la surface inférieure (16) au point d'intersection (I) du plan (70) avec le contour (20),
est variable et à variation continue le long respectivement du contour (30) et du profil (74).

2. Organe selon la revendication précédente, dans lequel la surface supérieure (24) est sensiblement plane.

3. Organe (12) selon l'une quelconque des revendications précédentes, dans lequel ta surface supérieure (24) est de forme générale allongée.

4. Organe selon la revendication précédente, dans lequel le contour (30) de la surface supérieure (24) comprend au moins deux portions (60,62) opposées rectilignes et sensiblement parallèles.

5. Organe (12) selon la revendication précédente, dans lequel le contour (30) de la surface supérieure (24) comprend au moins deux portions courbes (64,66) opposées reliant les portions rectilignes (60,62).

6. Organe selon la revendication 3, dans lequel le rayon de courbure du contour (30) varie entre un rayon minimum et un rayon maximum, tous les deux finis.

7. Organe (12) selon l'une quelconque des revendications précédentes, dans lequel te contour (30) de la surface supérieure (24) est définie par une spline, de préférence de degré trois ou cinq.

8. Organe (12) selon l'une quelconque des revendications précédentes, dans lequel le profil (74) en section de la surface périphérique (34) est une spline, de préférence de degré trois ou cinq.

9. Organe (12) selon la revendication précédente, dans lequel le profil en section de la surface périphérique (34) rejoint la surface inférieure (16) selon un angle compris entre 9 et 15 degrés.

10. Organe (12) selon l'une quelconque des revendications 8 et 9, dans lequel le profil (74) en section de la surface périphérique (34) rejoint la surface supérieure (24) selon un angle compris entre -25 et 25 degrés.

11. Organe (12) selon l'une quelconque des revendications précédentes, dans lequel les surfaces supérieure (24) et inférieure (16) sont parallèles.

12. Organe (12) selon l'une quelconque des revendications précédentes, dans lequel l'organe (12) est réalisé en gomme.

13. Pneumatique **caractérisé en ce qu'**il comprend un organe (12) selon l'une quelconque des revendications précédentes.

## Claims

1. Member (12) forming a mount for a device (26), comprising :
- a substantially flat bottom surface (16) for connection with a tyre, delimited by a contour (20),
- a top surface (24) for mounting the device (26), delimited by a contour (30),
- a peripheral surface (34) forming a skirt for connecting of the contour (20) of the bottom surface (16) to the contour (30) of the top surface (24),
**characterized in that** at least one of the parameters of the assembly consisting of :
- the curvature of the contour (30) of the top surface (24), and
- the curvature of the profile (74) of the peripheral surface (34), in section on any plane (70) normal to the bottom surface (16) and orthogonal to the tangent (72) to the contour (20) of the bottom surface (16) at the point of intersection (I) of the plane (70) with the contour (20),
is variable and has a continuous variation along respectively the contour (30) and the profile (74).

2. Member according to the preceding claim, in which the top surface (24) is substantially flat.

3. Member (12) according to either one of the preceding claims, in which the top surface (24) is of general elongate shape.

4. Member according to the preceding claim, in which the contour (30) of the top surface (24) comprises at least two opposite portions (60,62) that are rectilinear and substantially parallel.

5. Member (12) according to the preceding claim, in which the contour (30) of the top surface (24) comprises at least two opposite curved portions (64,66) connecting the rectilinear portions (60,62).

6. Member according to Claim 3, in which the radius of curvature of the contour (30) varies between a minimum radius and a maximum radius, both finite.

7. Member (12) according to any one of the preceding claims, in which the contour (30) of the top surface (24) is defined by a spline, preferably a third-degree or fifth-degree spline.

8. Member (12) according to any one of the preceding claims, in which the profile (74) in section of the peripheral surface (34) is a spline, preferably a third-degree or fifth-degree spline.

9. Member (12) according to the preceding claim, in which the profile in section of the peripheral surface (34) joins the bottom surface (16) at an angle of between 9 and 15 degrees.

10. Member (12) according to either one of Claims 8 and 9, in which the profile (74) in section of the peripheral surface (34) joins the top surface (24) at an angle of between -25 and 25 degrees.

11. Member (12) according to any one of the preceding claims, in which the top surface (24) and bottom surface (16) are parallel.

12. Member (12) according to any one of the preceding claims, in which the member (12) is made of rubber.

13. Tyre **characterized in that** it comprises a member (12) according to any one of the preceding claims.

## Patentansprüche

1. Organ (12), das einen Träger für eine Vorrichtung (26) bildet, das aufweist:
- eine im Wesentlichen ebene Unterfläche (16) zur Verbindung mit einem Luftreifen, die durch einen Umriss (20) begrenzt wird,
- eine Oberfläche (24) zum Tragen der Vorrichtung (26), die durch einen Umriss (30) begrenzt wird,
- eine Umfangsfläche (34), die eine Verbindungsschürze des Umrisses (20) der Unterfläche (16) mit dem Umriss (30) der Oberfläche (24) formt,
**dadurch gekennzeichnet, dass** mindestens einer der Parameter der Einheit, die besteht aus:
- der Krümmung des Umrisses (30) der Oberfläche (24), und
- der Krümmung des Profils (74) der Umfangsfläche (34), im Querschnitt gemäß jeder Ebene (70) normal zur Unterfläche (16) und orthogonal zur Tangente (72) am Umriss (20) der Unterfläche (16) am Schnittpunkt (I) der Ebene (70) mit dem Umriss (20),
variabel ist und entlang des Umrisses (30) bzw. des Profils (74) durchgehend variiert.

2. Organ nach dem vorhergehenden Anspruch, bei dem die Oberfläche (24) im Wesentlichen eben ist.

3. Organ (12) nach einem der vorhergehenden Ansprüche, bei dem die Oberfläche (24) eine allgemein längliche Form hat.

4. Organ nach dem vorhergehenden Anspruch, bei dem der Umriss (30) der Oberfläche (24) mindestens zwei geradlinige und im Wesentlichen parallele gegenüberliegende Teile (60, 62) enthält.

5. Organ (12) nach dem vorhergehenden Anspruch, bei dem der Umriss (30) der Oberfläche (24) mindestens zwei gegenüberliegende gekrümmte Teile (64, 66) enthält, die die geradlinigen Teile (60, 62) verbinden.

6. Organ nach Anspruch 3, bei dem der Krümmungsradius des Umrisses (30) zwischen einem minimalen Radius und einem maximalen Radius variiert, beide endlich.

7. Organ (12) nach einem der vorhergehenden Ansprüche, bei dem der Umriss (30) der Oberfläche (24) von einem Spline definiert wird, vorzugsweise einem Grad-3- oder Grad-5-Spline.

8. Organ (12) nach einem der vorhergehenden Ansprüche, bei dem das Querschnittsprofil (74) der Umfangsfläche (34) ein Spline ist, vorzugsweise ein Grad-3- oder Grad-5-Spline.

9. Organ (12) nach dem vorhergehenden Anspruch, bei dem das Querschnittsprofil der Umfangsfläche (34) sich mit der Unterfläche (16) gemäß einem Winkel zwischen 9 und 15 Grad vereint.

10. Organ (12) nach einem der Ansprüche 8 und 9, bei dem das Querschnittsprofil (74) der Umfangsfläche (34) sich mit der Oberfläche (24) gemäß einem Winkel zwischen -25 und 25 Grad vereint.

11. Organ (12) nach einem der vorhergehenden Ansprüche, bei dem die Ober- (24) und Unterfläche (16) parallel sind.

12. Organ (12) nach einem der vorhergehenden Ansprüche, bei dem das Organ (12) aus Gummi hergestellt ist.

13. Luftreifen, **dadurch gekennzeichnet, dass** er ein Organ (12) nach einem der vorhergehenden Ansprüche enthält.
